# EUROPEAN PATENT SPECIFICATION

(11) **EP 3 079 302 B1**
(45) Date of publication and mention of the grant of the patent: **19.06.2019**
(21) Application number: 15305533.0
(22) Date of filing: 10.04.2015
(51) Int. Cl.: H04L 12/24

(54) **METHOD AND SYSTEM FOR IMPROVING THE NETWORK CONFIGURATION TRUSTWORTHINESS IN A SOFTWARE DEFINED NETWORK**
VERFAHREN UND SYSTEM ZUR VERBESSERUNG DER NETZWERKKONFIGURATIONSVERTRAUENSWÜRDIGKEIT BEI EINEM SOFTWAREDEFINIERTEN NETZWERK
PROCÉDÉ ET SYSTÈME PERMETTANT D'AMÉLIORER LA FIABILITÉ DE LA CONFIGURATION D'UN RÉSEAU DANS UN RÉSEAU DÉFINI PAR LOGICIEL

(43) Date of publication of application: 12.10.2016
(73) Proprietor: Alcatel Lucent, 91620 Nozay (FR)
(72) Inventor: Kamga, Guy-Bertrand, 91620 Nozay (FR); Betge-Brezetz, Stéphane, 91620 Nozay (FR); Tazi, Monsef, 92370 Chaville (FR)
(74) Representative: Nokia EPO representatives

(56) References cited:
- DIEGO KREUTZ ET AL: "Towards secure and dependable software-defined networks", HOT TOPICS IN SOFTWARE DEFINED NETWORKING, ACM, 2 PENN PLAZA, SUITE 701 NEW YORK NY 10121-0701 USA, 16 August 2013 (2013-08-16), pages 55-60, XP058030697, DOI: 10.1145/2491185.2491199 ISBN: 978-1-4503-2178-5
- LI HE ET AL: "Byzantine-resilient secure software-defined networks with multiple controllers", 2014 IEEE INTERNATIONAL CONFERENCE ON COMMUNICATIONS (ICC), IEEE, 10 June 2014 (2014-06-10), pages 695-700, XP032632569, DOI: 10.1109/ICC.2014.6883400 [retrieved on 2014-08-26]
- SCHNEIDER FRED B ED - KERMARREC YVON (EDITOR): "The state machine approach: A tutorial", 1 January 1901 (1901-01-01), ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS; [LECTURE NOTES IN COMPUTER SCIENCE , ISSN 1611-3349], SPRINGER VERLAG, DE, PAGE(S) 18 - 41, XP047290621, ISSN: 0302-9743 ISBN: 978-3-540-89964-8 [retrieved on 2005-06-08] * paragraph [0001] * * paragraph [0003] * * page 23, paragraph 4 * * paragraph [0005] *
- XINGBIN YIN ET AL: "Software defined virtualization platform based on double-FlowVisors in multiple domain networks", 2013 8TH INTERNATIONAL CONFERENCE ON COMMUNICATIONS AND NETWORKING IN CHINA (CHINACOM), IEEE, 14 August 2013 (2013-08-14), pages 776-780, XP032546712, DOI: 10.1109/CHINACOM.2013.6694699 [retrieved on 2013-12-24]

## Description

### BACKGROUND OF THE INVENTION

### Field of the invention

The present invention generally relates to the trustworthiness in a software defined network (SDN). Software defined networking is an emerging paradigm allowing networks to be dynamically reconfigured by network applications. Indeed, the principle of SDN is to remove the control plane from the network equipment and have it available as a software module called SDN controller. It communicates with switches via its "southbound" interface to provide networking instructions, and communicates with applications via its "northbound" interface.

This SDN controller is a programmable central entity, which allows various network applications (e.g. network management, routing, deep packet Inspection, intrusion detection, intrusion prevention, firewall, quality of service monitoring, load balancer, etc.).

These SDN applications can flexibly access and modify the underlying network through simple application programming interfaces (API) that allow network programmability. This network programmability of SDN provides several advantages such as automated network control, dynamic network traffic management, etc. However, at the same time, this centralization of the network control through software-based SDN controllers induces important security threats, that could lead to a total control of the network by an attacker that would succeed in taking control of either a SDN application, running on top of a SDN controller, or of a SDN controller itself. A successful attack of a SDN application or of a SDN controller may have critical consequences, such as traffic duplication and/or rerouting, interception, impersonation, network configuration modification, deny of service, etc. The attacks or misbehaviors (e. g. bugs) are critical for a SDN controller handling a data center network, but they are even more critical for a SDN controller handling a carrier network, as several customers' data centers could be impacted.

So there is a need for a solution that controls the SDN controller's concentration of power (induced by the network programmability) as well as mitigates its vulnerability regarding potential compromised SDN applications or SDN controller.

### Description of the prior art

Different known methods exploit the possibility to have multiple/redundant SDN controllers that can be connected to the SDN switches for different purposes:
- The article **"**A Software-Defined Network Controller Architecture for Multi-Domain Brokering and Reputation, D. Marconett, S.J.B. Yoo, Journal of Network and Systems Management, Vol. 23, Issue 2, April 2015" describes a method improving the controller response time performance by offering load balancing features upon a set of controllers. It introduces an agent broker (called FlowBroker) which selects the best controller according to some predefined requirements. This method also uses machine learning techniques to automatically learn the performance characteristics of each controller.
- The document US 20140281669 describes an OpenFlow controller master-slave initialization protocol that offers fault tolerance in case of controller failure. This protocol defines a "failover priority logic table" stored within each SDN switch and so that, when the connection to the controller is broken, the switch connects itself to the next controller in this table.

However, these two known methods do not deal with the detection of a tampered controller (or tampered applications) sending tampered configurations to the switches. Other known methods are tackling the potential security issues of a SDN controller such as:
- The article **"**Towards secure and dependable software-defined networks, D. Kreutz, F. Ramos, and P. Veríssimo, ACM SIGCOMM Workshop on Hot Topics in Software Defined Networking, HotSDN'13, Hong-Kong, 2013" describes advanced network equipments that may be dynamically associated to a controller or another one, depending on some policies. This solution is however quite difficult to implement in the existing physical or virtual equipments as it requests changing their firmware.
- The article **"**A comprehensive security architecture for SDN, Z. Hu, M. Wang, X. Yan, Y. Yin and Z. Luo, Conference ICIN 2015, Feb. 17-19, 2015, Paris" proposes to integrate, in the SDN controller, a module which allows prioritizing the requests made by applications. For this purpose, a priority is previously defined for each network application. For instance, a security management application will be more prioritized than a load balancing application. This prevents that a tampered load balancing application would try to modify the network traffic rules set by a security management application.
- Another similar approach uses the notion of role-based authorization and request signing.

These two last approaches allow reinforcing the protection of the controller, or of the application, regarding potential attacks. However, in case of successful attacks, the tampered application/ controller cannot be detected, and tampered configurations will actually be sent into the network.

Finally, note that known trusted computing mechanisms allow protecting the execution environment of an application (or a virtual machine). We can mention, for instance, the trusted computing technologies enabled by a TPM (Trusted Platform Module) or by a Secure Element (SE) and Trusted Execution Environment (TEE) defined by the standardization organization Global Platform. However, even if these mechanisms also reinforce the protection of the execution, it may be possible that some attacks can be performed and not detected (e.g. through human vectors or zero days attacks), which would allow sending tampered or illegitimate configurations in the network.

Thus, there is a need to provide a technical solution for detecting potential attacks (and tampered network configuration requests) and finding what would be the trustable network configurations to enforce.
This can be solved by applying, the method and the system according to the invention.

### SUMMARY OF THE INVENTION

The invention is defined by the claims.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings in which:
- Figure 1 is a diagram illustrating an embodiment of the method according to the invention.
- Figure 2 schematically represents a part of a SDN network comprising an embodiment of the two trust-oriented controller proxies according to the invention.

### DETAILED DESCRIPTION OF THE PREFERRED EMBODIMENTS

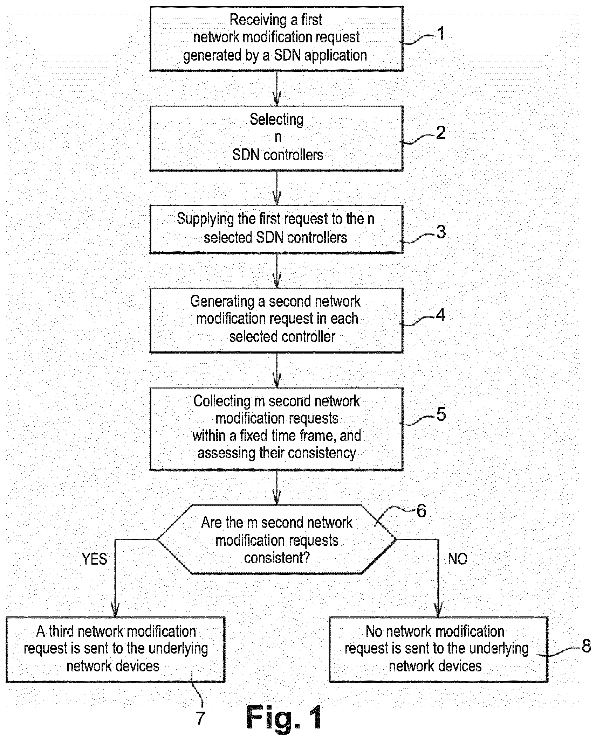

The embodiment, of the method according to the invention that is illustrated by **Figure 1** comprises the following steps:
**Step 1:** In a SDN network, a SDN application generates a first network modification request AppReq.
**Step 2:** Selecting n controllers among the SDN controllers of the SDN network, (n being greater than one), the selected controllers preferably being different by their respective execution environments, and/or implementations, etc. The selection is made according to a given dispatching policy.
**Step 3:** Duplicating the first network modification request AppReq, and forwarding n copies respectively to the n selected SDN controllers.
**Step 4:** For i = 1 to n, the i-th selected SDN controller Ci handles the first network modification request AppReq it has received and then generates a second network modification request CtrlReqi.
**Step 5:** During a fixed time interval, collecting m second network modification requests CtrIReq1, .., CtrlReqm generated by m controllers among the n selected SDN controllers, m being lower to or equal to the number n of selected controllers.
**Step 6:** Assessing the consistency of the collected second requests CtrIReq1, .., CtrlReqm. For instance, the assessment of the consistency is based on the number of controllers having replied, and the number of controllers having generated a same second network modification request.
**Step 7:** If the assessed consistency is greater than a predetermined threshold, a third network modification request is sent to at least one of the SDN devices, since the first modification request AppReq is considered as trustworthy. Preferably, the threshold is predetermined according to a trust policy assigned to the SDN application that has generated this first network modification request AppReq.
**Step 8:** If the assessed consistency is not greater than the predetermined threshold, no network modification request is sent to the SDN devices, since the first modification request AppReq is not considered as trustworthy; and an error message is generated.

This method allows detecting potential attacks on a SDN controller (and possibly also on the network applications relying on this controller). These attacks are conducted by enforcing tampered configuration in the network (to spy it or to perturb it). This method can also leverage some existing mechanisms (e.g. trusted computing). So it increases the trust of operators in actually using SDN technologies.
Moreover, this invention allows taking into account the criticality of the configuration to achieve (as different levels of checking can be performed according to this configuration criticality). Indeed, the invention allows to adapt the evaluation of the level of trust of network configurations through an application-based trust and consistency policy used for adjusting the number and type of solicited controllers, the minimum trust level, etc. Different types of controller requests can also be defined, e.g.: 'monitoring' type for configuration only requesting traffic monitoring or performance information from the network; 'quality of service' (QoS) type for configuration requesting the setting of QoS/prioritization rules; or 'routing' type for configuration requesting the setting of traffic routing rules. For instance, as the 'monitoring' type is less critical than the 'qos' type, the level of checking may be inferior for 'monitoring' configuration requests.

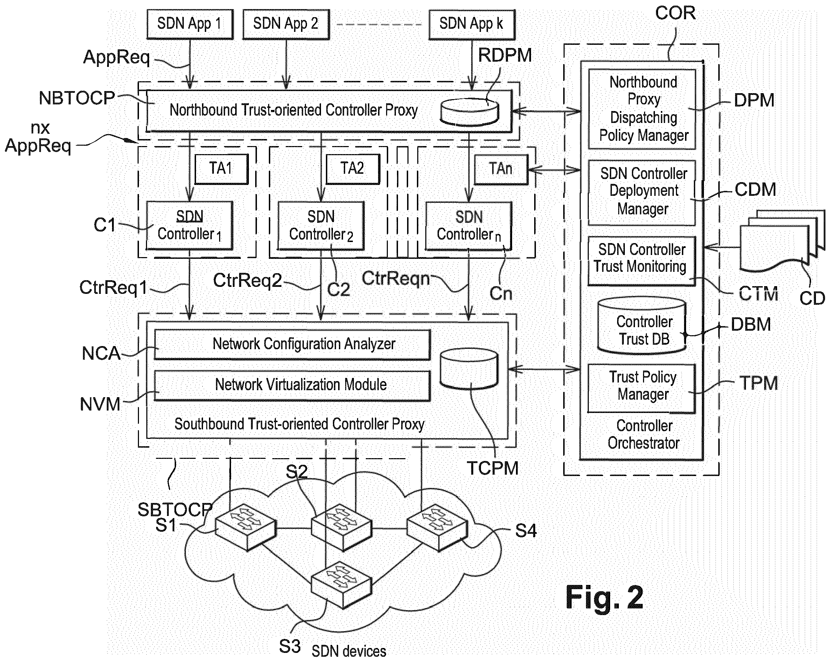

**Figure 2** schematically represents a part of a SDN network comprising an embodiment of the two trust-oriented controller proxies according to the invention. This embodiment comprises:
- k SDN applications: App 1, ...., App k.
- A northbound trust-oriented controller proxy NBTOCP that comprises a memory RDPM storing a request dispatching policy.
- A plurality of SDN controllers C1, C2, etc. Each SDN controller is associated with a trust agent, respectively TA1, TA2, TA3, .... These controllers are managed by the northbound controller proxy NBTOCP.
- A southbound trust-oriented controller proxy SBTOCP that comprises:
   -- A network configuration analyzer NCA.
   -- A network virtualization module NVM.
   -- A memory storing an application-based trust and consistency policy.
- A plurality of SDN devices, S1, S2, S3, S4 controlled by the southbound controller proxy SBTOCP.
- A controller orchestrator COR. It receives configuration data CD comprising an application trust policy and a controller trust policy. It comprises several software modules that will be described later.

Each SDN Application, App 1, etc, is characterized by the following:
- A network impact level, corresponding to the level of damage that can be done on the network by this application in the case of error or misbehaviour.
- A minimum trust level under which its network modification requests cannot be enforced.
- A consistency policy stating how many similar responses from involved controllers should be received for being considered as consistent (e.g.in terms of percentage: at least x %of selected controllers should reply and at least y %of selected controllers should reply the same).

The **northbound controller proxy NBTOCP** is a software module that manages the pool of SDN controllers C1, C2, etc; and is viewed as a real controller by the applications App 1, ..., App k. Each first network modification request AppReq coming from a SDN Application is automatically forwarded by the northbound trust-oriented controller proxy NBTOPCto a set of diverse SDN controllers.
In this example, the SDN application App 1 generates a first network modification request AppReq. The northbound controller proxy NBTOCP selects a set of n controllers C1, ..., Cn, among the SDN controllers C1, C2, etc, by applying a request dispatching policy supplied by the controller orchestrator CO (n is greater than one).
Then it duplicates the first network modification request AppReq and dispatches n copies of it respectively to the n selected controllers C1, ..., Cn. The request dispatching policy contains rules that allow determining how many and which controllers, must handle a same first network modification request, taking into account:
-- the nature of the application (Identifier and network impact level),
-- the called interface (the related network capability),
-- and the respective trust levels of the controllers C1, C2, ...
The northbound controller proxy NBTOCP manages the mapping between the interfaces of the SDN applications App 1, ..., App k and the interfaces of the underlying controllers C1, C2, .... For instance, these two interfaces use a well known interface type such as the application programming interfaces called "RESTful".

In this example, each one of the **n selected SDN controllers** C1, C2, ..., Cn receives a copy of the first network modification request AppReq. For i = 1 to n, the SDN controller Ci handles the first request AppReq in order to generate a second network modification request CtrReqi, and sends it to the southbound trust-oriented controller proxy SBTOCP. This latter collects, within a fixed or configured time frame, the n second requests CtrlReq1, .., CtrlReqn respectively generated by the n selected SDN controllers C1, .., Cn.

Each SDN controller C1, C2, ...ischaracterized by the following:
- Execution environment details (e.g. operating system and version, security posture, etc.).
- A trust level (qualitative or quantitative value), based for instance on the controller's execution environment and its implementation characteristics (e.g. language, libraries, etc.).
- The authorized network capabilities, for instance:
   -- Monitoring: ability to get traffic data.
   -- Routing: ability to modify traffic rules.
- Each northbound interface exposed to SDN Applications is mapped to a network capability (e.g. monitoring, routing, etc.).

The **Controller Trust Agents** TA1, TA2, ... are software modules respectively installed in the trusted execution environments (e.g. hardened virtual machine or server) of the SDN controllers C1, C2, etc, to monitor the status and the security posture of each supervised controller. They frequently send monitoring information to the controller orchestrator CO, which in turn updates the trust level of the controllers C1, C2, etc, and informs the northbound and southbound trust-oriented controller proxies NBTOCP and SBTOCP. If the trust level of a controller is below a certain threshold, this controller can be automatically removed from all the controller pools and replaced by a new one, by the controller orchestrator CO. Each selected SDN controller C1, .., Cn sends a second network modifications request in an appropriate southbound protocol format (e.g. FlowMod message in the OpenFlow context, PCReq message in a PCEP context).

The **southbound trust-oriented controller proxy** SBTOCP is a software module sitting between the controllers C1, C2, etc, and the network devices S1, S2, S3, S4. It is viewed as a network device by the controllers C1, C2, etc, and as a controller by the network devices S1, S2, S3, S4. It receives the second network modification requests CtrReq1, .., CtrReqn respectively generated by the controllers C1, C2, ..., Cn; and it generates configuration messages for the SDN devices S1, ..., S4. It also reports suspicious controllers (those with second network modification requests qualified as un-trusted or with lowest trust level) to the controller orchestrator CO in order to eventually update the trust level of these controllers. For instance, if a controller always provides network modification requests different from the others, it may be considered as having a high probability of being tampered and it can then be suppressed from the system.

In this example, it assesses the trustworthiness of the first network modification request AppReq, as follows:
- The southbound trust-oriented controller proxy SBTOCP receives, from the n selected controllers C1, .., Cn, n second network modification requests CtrReq1, .., CtrReqn corresponding to the first request AppReq. Then it compares each one of these second requests with another, and groups them according to their similarities, i. e. similar second requests are put into a same group. We obtain a plurality of groups, each group comprising only similar second requests.
- The **consistency of each group** is assessed according to a given consistency policy, chosen as a function of the first request. Then the groups are filtered according to their respective consistency values, in order to only retain the consistent groups.
- Then the **trustworthiness of each consistent group** is assessed by using the respective trust levels of the selected SDN controllers C1, .., Cn (e.g. equal to a weighted average of SDN controllers' trust levels) and a trust level is obtained for each group.
- A **trust level for a given first network modification request** is computed based on:
   (i) the relative number of the corresponding second requests having a same value, and
   (ii) the trust level respectively assigned to the controllers having generated the received second requests.

In one possible embodiment, a respective trust level is computed for each second network modification request, by:
(i) adding the trust levels of the controllers having generated the same second network modification request; and,
(ii) dividing the obtained value by the sum of the trust levels of all the solicited controllers. It can be understood as the trust level of a second network modification request is the average of the trust levels of the controllers having generated the same request. Each controller has a trust level assigned initially (e.g. by an administrator) and this trust level is continuously updated (increased or decreased) by the controller orchestrator CO, using the monitoring data from the controllers' trust agents and from the southbound trust-oriented controller proxy SBTOCP.
Once the trust level of each distinct second network modification request is computed, the trust level of the corresponding first network modification is equal to the trust level of the second network modification request having the highest value.

Note that various other embodiments are also possible by using other methods to compute this trust level. These alternative methods can consist in considering that:
- The trust level of each second network modification request is equal to the trust level of the controller having generated it and the trust level of the first network modification request is equal to (i) the trust level of the second network modification request with the highest trust level or (ii) the trust level of the second network modification request randomly selected among all the received second network modification requests
- The trust level of each second network modification request depends on the trust level of its controller, the number of controllers having generated the similar requests and the computation time used by each controller to generate the second request. Each network modification type can have a configured reference computation time used to compare with the computation time of each controller.

Finally, if one first network modification request has a trust level superior to a given trust threshold (which may depend on the application or the network traffic nature as defined in the controller orchestration policy), this request is deemed trustworthy enough and then actually enforced in the network. Otherwise, no network modification is achieved (Of course this can raise an alert to a security administrator).
In the first case, a third network modification request is forwarded to the SDN devices S1, S2, S3, S4 i. e. if the first request corresponds to the group having the highest trust level, and if this highest trust level is above a minimum trust threshold chosen for the related SDN application.

The interfaces used to receive network modification requests from controllers and to send them to SDN devices are well known SDN southbound interfaces such as OpenFlow, NetConf, OVSDB, PCEP, etc.

The underlying SDN network (the SDN devices S1, S2, S3, S4) is hidden to the SDN controllers C1, .., Cn by using classical network virtualization techniques (e.g. flow space isolation, topology isolation, etc.). In fact, the messages (e.g. topology update, route request, statistics) received from the SDN devices are processed in order to include some tracking information (e.g. cookie, requestID) and to be anonymised (e.g. virtualization of IP addresses) before to be dispatched to controllers according to the device message dispatching policy.

The **Controller Orchestrator CO,** is a central component comprising the following software modules:
- a software module (not represented) for receiving configuration data CD comprising an application trust policy and a controller trust policy.
- A dispatching policy manager DPM, for supplying a request dispatching policy to the northbound trust-oriented controller proxy NBTOCP. This policy is based on: the network impact level of applications, the network capability of the northbound interface, the respective trust levelsof the controllers, etc.
- A SDN controller deployment manager CDM for supplying initialization data to the trust agents TA1, TA2, TA3, respectively associated to the SDN controllers C1, C2, It deploys the controllers C1, C2, within trusted execution environments, by using a controller deployment template containing all the required information (e.g. execution environment type and image files, execution environment security hardening, controller type and dependent libraries etc).
- A SDN controller trust monitoring CTM for:
   -- monitoring the controllers' execution status and security posture, thanks to a controller agent installed in the trusted environment executing each controller C1, C2, ....;
   -- collecting information related to suspicious controllers (e.g. number of suspicious second network modification requests, trust level of each suspicious second network modification request, etc.) from the southbound trust-oriented controller proxy SBTOCP
   -- and for managing (setting, updating, etc.) the trust level of the controllers C1, C2, ..., thanks to monitoring data or configuration data, supplied by an administrator and stored in a controller trust database DBM in the controller orchestrator COR.
- A trust policy manager TPM for supplying an application based consistency policy to the southbound trust-oriented controller proxy SBTOCP. It defines the application-related information (minimum trust level, consistency policy) used by the southbound controller proxy SBTOCP to assess the consistency and trustworthiness of network modification requests.

In addition, all the components of this embodiment can also be executed within a trusted execution environment (highly protected environment in terms of security) which will further reinforce the protection of the network against tamper configuration.

In another embodiment, some SDN Applications (e.g. that purely react to network events) can be executed within each SDN controller's execution environment. This embodiment allows therefore better protecting also these applications from attacks. If one application instance (running in the SDN controller's execution environment) is tampered, the other application instances (running in other SDN controllers' execution environments) may not however be tampered and can be used by the southbound trust-oriented controller proxy, to select the appropriate controller's request to be enforced in the underlying network.

## Claims

1. Method for improving network configuration trustworthiness in a software defined network, SDN, comprising a plurality of SDN controllers that can receive network modification requests generated by SDN applications, and at least one SDN device that can receive network modification requests generated by the SDN controllers; comprising the steps of:
- receiving (1) a first network modification request (AppReq) generated by a SDN application (App 1);
- selecting (2) a plurality of controllers (C1, ..., Cn);
- supplying (3) the first network modification request (AppReq) to the selected controllers;
- generating (4) a second network modification request in each selected controller when it receives the first network modification request (AppReq);
- collecting (5) second network modification requests (CtrReq1, .., CtrReqn) respectively generated by the selected controllers when they receive the first network modification request (AppReq), and assessing (5) **a trust value for this first network modification request (AppReq)** as a function of the consistency of these second network modification requests (CtrReq1, .., CtrReqn) ;
- and enforcing (6, 7) a third network modification request in at least one SDN device (S1, ..., S4) if, and only if, the assessed trust value for this first network modification request (AppReq) is greater than a predetermined threshold;
**characterized in that,** for assessing (5) a trust value for this first network modification request (AppReq), it comprises the steps of:
- receiving, from the selected controllers (C1, .., Cn), the generated second network modification requests (CtrReq1, ..., CtrReqn) corresponding to said first network modification request (AppReq),
- comparing each one of these second network modification requests (CtrReq1, .., CtrReqn) with another, and grouping them according to their similarities, so that similar second network modification requests are put into a same group,
- assessing a **consistency value for each group** according to a given consistency policy, chosen as a function of the first network modification request,
- filtering the groups according to their respective consistency values, and retaining the **consistent groups** only,
- computing a respective **trust level for each second network modification request** (CtrReq1, .., CtrReqn), corresponding to said first network modification request (AppReq), and belonging to a consistent group, based on:
(i) the **relative** number of the second network modification requests (CtrReq1, ..., CtrReqn) having a same value, and
(ii) trust levels respectively assigned to the controllers (C1, .., Cn) having generated the received second network modification requests;
- comparing the trust levels of all the second network modification requests (CtrReq1, .., CtrReqn), and taking the highest one **for constituting the trust level of the corresponding first network modification request.**

2. The method according to claim 1, wherein computing a respective **trust level for each second network modification request** (CtrReq1, .., CtrReqn), corresponding to said first network modification request (AppReq), comprises the steps of:
- adding the trust levels respectively assigned to all the controllers having generated second network modification requests (CtrReq1, .., CtrReqn) that are the same as the considered second network modification request, and
- dividing the obtained value by the sum of the trust levels of all said selected controllers.

3. The method according to claim 1, wherein computing a respective **trust level for each second network modification request** (CtrReq1, .., CtrReqn), corresponding to said first network modification request (AppReq), comprises:
- for each **second network modification request** taking a trust level equal to the trust level of the controller having generated this **second network modification request**,
- and wherein, for constituting the trust level of said first network modification request, taking:
(i) the highest trust level among the trust levels of the second network modification requests, or
(ii) the trust level of a second network modification request randomly selected among all the received second network modification requests.

4. The method according to claim 1, wherein computing a **respective trust level for each second network modification request** (CtrReq1, .., CtrReqn) corresponding to said first network modification request (AppReq) comprises the step of computing it as a function of:
- the trust level of its controller,
- the number of controllers having generated the second network modification requests that are similar to the considered second network modification request;
- and the computation time used by each controller to generate the second network modification request.

5. The method according to claim 1, wherein assessing a **consistency value for each group** according to a given consistency policy, comprises the step of determining the number of controllers having generated a same second network modification request.

6. The method according to claim 1, wherein selecting (2) a plurality of controllers (C1, ..., Cn), comprises the step of selecting controllers having different execution environments.

7. The method according to claim 1, wherein selecting (2) a plurality of controllers (C1, ..., Cn), comprises the step of selecting controllers having different implementations.

8. **A southbound trust-oriented controller proxy (SBTOCP)** for a software defined network, SDN, comprising a plurality of SDN controllers (C1, C2, ...) that can receive network modification requests generated by SDN applications, and at least one SDN device (S1, ..., S4) that can receive network modification requests generated by the SDN controllers; **characterized in that** it comprises means for implenting the method according to one of the preceding claims.

## Patentansprüche

1. Verfahren zum Verbessern der Netzkonfigurationvertrauenswürdigkeit in einem durch Software definierten Netz (SDN), das mehrere SDN-Steuereinrichtungen, die Netzmodifikationsanforderungen, die von SDN-Anwendungen erzeugt werden, empfangen können, und mindestens eine SDN-Vorrichtung umfasst, die Netzmodifikationsanforderungen, die von den SDN-Steuereinrichtungen erzeugt werden, empfangen kann; wobei das Verfahren die folgenden Schritte umfasst:
- Empfangen (1) einer ersten Netzmodifikationsanforderung (AppReq), die von einer SDN-Anwendung (App 1) erzeugt worden ist;
- Auswählen (2) mehrerer Steuereinrichtungen (C1, ..., Cn) ;
- Zuführen (3) der ersten Netzmodifikationsanforderung (AppReq) zu den ausgewählten Steuereinrichtungen;
- Erzeugen (4) einer zweiten Netzmodifikationsanforderung (AppReq) in jeder ausgewählten Steuereinrichtung, wenn sie die erste Netzmodifikationsanforderung (AppReq) empfängt;
- Sammeln (5) von zweiten Netzmodifikationsanforderungen (CtrReq1, ..., CtrReqn), die jeweils von den ausgewählten Steuereinrichtungen erzeugt worden sind, wenn sie die erste Netzmodifikationsanforderung (AppReq) empfangen, und Bewerten (5) eines Vertrauenswertes für diese erste Netzmodifikationsanforderung (AppReq) als eine Funktion der Konsistenz dieser zweiten Netzmodifikationsanforderungen (CtrReq1, ..., CtrReqn); und
- Durchsetzen (6, 7) einer dritten Netzmodifikationsanforderung in mindestens einer SDN-Vorrichtung (S1, ..., S4) wenn, und nur dann, wenn der bewertete Vertrauenswert für diese erste Netzmodifikationsanforderung (AppReq) größer ist als ein vorgegebener Schwellenwert;
**dadurch gekennzeichnet, dass** das Verfahren zum Bewerten (5) eines Vertrauenswertes für diese erste Netzmodifikationsanforderung (AppReq) die folgenden Schritte umfasst:
- Empfangen der erzeugten zweiten Netzmodifikationsanforderungen (CtrReq1, ..., CtrReqn), die den ersten Netzmodifikationsanforderung (AppReq) von den ausgewählten Steuereinrichtungen (C1, ..., Cn) entsprechen,
- Vergleichen jeder dieser zweiten Netzmodifikationsanforderungen (CtrReq1, ..., CtrReqn) miteinander und Gruppieren dieser gemäß ihren Ähnlichkeiten, so dass ähnliche Netzmodifikationsanforderungen in eine gleiche Gruppe gesteckt werden,
- Bewerten eines Konsistenzwerts für jede Gruppe gemäß einer vorgegebenen Konsistenzrichtlinie, die als eine Funktion der ersten Netzmodifikationsanforderung ausgewählt worden ist,
- Filtern der Gruppen gemäß ihren jeweiligen Konsistenzwerten, und Behalten ausschließlich der konsistenten Gruppen,
- Berechnen eines jeweiligen Vertrauensniveaus für jede zweite Netzmodifikationsanforderung (CtrReq1, ..., CtrReqn), die der ersten Netzmodifikationsanforderung (AppReq) entspricht und zu einer konsistenten Gruppe gehört, basierend auf:
(i) der relativen Zahl der zweiten Netzmodifikationsanforderungen (CtrReq1, ..., CtrReqn), die denselben Wert aufweisen, und
(ii) Vertrauensniveaus, die jeweils den Steuereinrichtungen (C1, ..., Cn) zugeordnet sind, die die empfangenen zweiten Netzmodifikationsanforderungen erzeugt haben;
- Vergleichen der Vertrauensniveaus aller zweiten Netzmodifikationsanforderungen (CtrReq1, ..., CtrReqn), und Übernehmen des höchsten Vertrauensniveaus, um das Vertrauensniveau der entsprechenden ersten Netzmodifikationsanforderung festzulegen.

2. Verfahren nach Anspruch 1, wobei das Berechnen eines jeweiligen Vertrauensniveaus für jede zweite Netzmodifikationsanforderung (CtrReq1, ..., CtrReqn), die der ersten Netzmodifikationsanforderung (AppReq) entspricht, die folgenden Schritte umfasst:
- Addieren der Vertrauensniveaus, die jeweils allen Steuereinrichtung zugeordnet sind, die die zweiten Netzmodifikationsanforderungen (CtrReq1, ..., CtrReqn) erzeugt haben, die gleich der betrachteten zweiten Netzmodifikationsanforderung sind, und
- Dividieren des erhaltenen Wertes durch die Summe der Vertrauensniveaus aller ausgewählten Steuereinrichtungen.

3. Verfahren nach Anspruch 1, wobei das Berechnen eines jeweiligen Vertrauensniveaus für jede zweite Netzmodifikationsanforderung (CtrReq1, ..., CtrReqn), die der ersten Netzmodifikationsanforderung (AppReq) entspricht, Folgendes umfasst:
- für jede zweite Netzmodifikationsanforderung Übernehmen eines Vertrauensniveaus, das gleich dem Vertrauensniveau der Steuereinrichtung ist, die diese zweite Netzmodifikationsanforderung erzeugt hat,
- und wobei zum Festlegen des Vertrauensniveaus der ersten Netzmodifikationsanforderung Folgendes übernommen wird:
(i) das höchste Vertrauensniveau unter den Vertrauensniveaus der zweiten Netzmodifikationsanforderungen, oder
(ii) das Vertrauensniveau einer zweiten Netzmodifikationsanforderung, die aus allen empfangenen zweiten Netzmodifikationsanforderungen zufällig ausgewählt worden ist.

4. Verfahren nach Anspruch 1, wobei das Berechnen eines jeweiligen Vertrauensniveaus für jede zweite Netzmodifikationsanforderung (CtrReq1, ..., CtrReqn), die der ersten Netzmodifikationsanforderung (AppReq) entspricht, den Schritt des Berechnens des Vertrauensniveaus als eine Funktion von Folgendem umfasst:
- dem Vertrauensniveau seiner Steuereinrichtung,
- der Zahl der Steuereinrichtungen, die die zweiten Netzmodifikationsanforderungen erzeugt haben, die der betrachteten zweiten Netzmodifikationsanforderung ähnlich sind;
- und der Rechenzeit, die von jeder Steuereinrichtung verwendet wird, um die zweite Netzmodifikationsanforderung zu erzeugen.

5. Verfahren nach Anspruch 1, wobei das Bewerten eines Konsistenzwertes für jede Gruppe, die einer vorgegebenen Konsistenzrichtlinie entspricht, den Schritt des Bestimmens der Zahl der Steuereinrichtungen, die dieselbe zweite Netzmodifikationsanforderung erzeugt haben, umfasst.

6. Verfahren nach Anspruch 1, wobei das Auswählen (2) mehrerer Steuereinrichtungen (C1, ..., Cn) den Schritt des Auswählens von Steuereinrichtungen, die unterschiedliche Ausführungsumgebungen aufweisen, umfasst.

7. Verfahren nach Anspruch 1, wobei das Auswählen (2) mehrerer Steuereinrichtungen (C1, ..., Cn) den Schritt des Auswählens von Steuereinrichtungen, die unterschiedliche Implementierungen aufweisen, umfasst.

8. Nach Süden gehender vertrauensorientierter Steuereinrichtungs-Proxy (SBTOCP) für ein durch Software definiertes Netz (SDN), das mehrere SDN-Steuereinrichtungen (C1, C2, ...), die Netzmodifikationsanforderungen empfangen können, die von SDN-Anwendungen erzeugt werden, und mindestens eine SDN-Vorrichtung (S1, ..., S4), die von den SDN-Steuereinrichtungen erzeugte Netzmodifikationsanforderungen empfangen kann, umfasst; **dadurch gekennzeichnet, dass** der SBTOCP Mittel zum Implementieren des Verfahrens nach einem der vorhergehenden Ansprüche umfasst.

## Revendications

1. Procédé pour améliorer le niveau de confiance des configurations de réseau dans un réseau défini par logiciel, SDN, comprenant une pluralité de contrôleurs SDN capables de recevoir des demandes de modification de réseau générées par des applications SDN, et au moins un dispositif SDN capable de recevoir des demandes de modification de réseau générées par les contrôleurs SDN ; comprenant les étapes consistant à :
- recevoir (1) une première demande de modification de réseau (AppReq) générée par une application SDN (App 1) ;
- sélectionner (2) une pluralité de contrôleurs (C1, ..., Cn) ;
- fournir (3) la première demande de modification de réseau (AppReq) aux contrôleurs sélectionnés ;
- générer (4) une deuxième demande de modification de réseau dans chaque contrôleur sélectionné lorsque celui-ci reçoit la première demande de modification de réseau (AppReq) ;
- collecter (5) des deuxièmes demandes de modification de réseau (CtrReq1, ..., CtrReqn) générées respectivement par les contrôleurs sélectionnés lorsque ceux-ci reçoivent la première demande de modification de réseau (AppReq), et estimer (5) une **valeur de confiance pour cette première demande de modification de réseau (AppReq)** en fonction de la cohérence de ces deuxièmes demandes de modification de réseau (CtrReq1, ..., CtrReqn) ;
- et mettre en application (6, 7) une troisième demande de modification de réseau dans au moins un dispositif SDN (S1, ..., S4) si et seulement si la valeur de confiance estimée pour cette première demande de modification de réseau (AppReq) est supérieure à un seuil prédéterminé ;
**caractérisé en ce que,** pour l'estimation (5) d'une valeur de confiance pour cette première demande de modification de réseau (AppReq), il comprend les étapes consistant à :
- recevoir, depuis les contrôleurs sélectionnés (C1, ..., Cn), les deuxièmes demandes de modification de réseau générées (CtrReq1, ..., CtrReqn) correspondant à ladite première demande de modification de réseau (AppReq),
- comparer chacune de ces deuxièmes demandes de modification de réseau (CtrReq1, ..., CtrReqn) les unes aux autres, et les regrouper en fonction de leurs similarités, afin que les deuxièmes demandes de modification de réseau similaires soient placées dans un même groupe,
- estimer une **valeur de cohérence pour chaque groupe** selon une politique de cohérence donnée, choisie en fonction de la première demande de modification de réseau,
- filtrer les groupes en fonction de leurs valeurs de cohérence respectives, en ne conservant que les **groupes cohérents,**
- calculer un **niveau de confiance** respectif **pour chaque deuxième demande de modification de réseau** (CtrReq1, ..., CtrReqn), correspondant à ladite première demande de modification de réseau (AppReq) et appartenant à un groupe cohérent, d'après :
(i) le nombre **relatif** de deuxièmes demandes de modification de réseau (CtrReq1, ..., CtrReqn) ayant la même valeur, et
(ii) les niveaux de confiance attribués respectivement aux contrôleurs (C1, ..., Cn) ayant généré les deuxièmes demandes de modification de réseau reçues ;
- comparer les niveaux de confiance de toutes les deuxièmes demandes de modification de réseau (CtrReq1, ..., CtrReqn) et prendre le plus élevé **pour constituer le niveau de confiance de la première demande de modification de réseau correspondante.**

2. Procédé selon la revendication 1, dans lequel le calcul d'un **niveau de confiance** respectif **pour chaque deuxième demande de modification de réseau** (CtrReq1, ..., CtrReqn), correspondant à ladite première demande de modification de réseau (AppReq), comprend les étapes consistant à :
- additionner les niveaux de confiance respectivement attribués à tous les contrôleurs ayant généré des deuxièmes demandes de modification de réseau (CtrReq1, ..., CtrReqn) qui sont identiques à la deuxième demande de modification de réseau considérée, et
- diviser la valeur obtenue par la somme des niveaux de confiance de tous les contrôleurs sélectionnés.

3. Procédé selon la revendication 1, dans lequel le calcul d'un **niveau de confiance** respectif **pour chaque deuxième demande de modification de réseau** (CtrReq1, ..., CtrReqn), correspondant à ladite première demande de modification de réseau (AppReq), comprend les étapes consistant à :
- pour chaque **deuxième demande de modification de réseau,** prendre un niveau de confiance égal au niveau de confiance du contrôleur ayant généré cette **deuxième demande de modification de réseau,**
- et pour constituer le niveau de confiance de ladite première demande de modification de réseau, prendre :
(i) le plus haut niveau de confiance parmi les niveaux de confiance des deuxièmes demandes de modification de réseau, ou
(ii) le niveau de confiance d'une deuxième demande de modification de réseau sélectionnée de manière aléatoire parmi toutes les deuxièmes demandes de modification de réseau reçues.

4. Procédé selon la revendication 1, dans lequel le calcul d'un **niveau de confiance** respectif **pour chaque deuxième demande de modification de réseau** (CtrReq1, ..., CtrReqn), correspondant à ladite première demande de modification de réseau (AppReq), comprend l'étape consistant à le calculer comme étant une fonction :
- du niveau de confiance de son contrôleur,
- du nombre de contrôleurs ayant généré les deuxièmes demandes de modification de réseau qui sont similaires à la deuxième demande de modification de réseau considérée ;
- et du temps de calcul utilisé par chaque contrôleur pour générer la deuxième demande de modification de réseau.

5. Procédé selon la revendication 1, dans lequel l'estimation d'une **valeur de cohérence pour chaque groupe** selon une politique de cohérence donnée comprend l'étape consistant à déterminer le nombre de contrôleurs ayant généré une même deuxième demande de modification de réseau.

6. Procédé selon la revendication 1, dans lequel la sélection (2) d'une pluralité de contrôleurs (C1, ..., Cn) comprend l'étape consistant à sélectionner des contrôleurs ayant des environnements d'exécution différents.

7. Procédé selon la revendication 1, dans lequel la sélection (2) d'une pluralité de contrôleurs (C1, ..., Cn) comprend l'étape consistant à sélectionner des contrôleurs ayant des mises en oeuvre différentes.

8. **Contrôleur proxy d'interface sud orienté sécurité (SBTOCP)** utilisé dans un réseau défini par logiciel, SDN, comprenant une pluralité de contrôleurs SDN (C1, C2, ...) capables de recevoir des demandes de modification de réseau générées par des applications SDN, et au moins un dispositif SDN (S1, ..., S4) capable de recevoir des demandes de modification de réseau générées par les contrôleurs SDN ; **caractérisé en ce qu'**il comprend un moyen pour mettre en oeuvre le procédé selon l'une des revendications précédentes.
